# EUROPEAN PATENT SPECIFICATION

(11) **EP 1 985 839 B1**
(45) Date of publication and mention of the grant of the patent: **22.02.2017**
(21) Application number: 07106809.2
(22) Date of filing: 24.04.2007
(51) Int. Cl.: F02M 37/22

(54) **Fuel Filter and Fuel Filter Housing**
Kraftstofffilter und Gehäuse dafür
Filtre à carburant et son logement

(43) Date of publication of application: 29.10.2008
(73) Proprietor: Delphi Technologies, Inc., Troy, MI 48007 (US)
(72) Inventor: Marx, Patrice, 54650, Saulnes (FR)
(74) Representative: Delphi France SAS

(56) References cited:
- EP-A1- 0 537 521
- WO-A-2005/044420
- DE-U1- 9 414 297
- FR-A1- 2 812 822
- US-A- 4 011 848

## Description

The present invention is concerned with a fuel filter and a fuel filter housing, particularly, but not exclusively, a fuel filter and fuel filter housing used in the fuel supply system of an automobile.

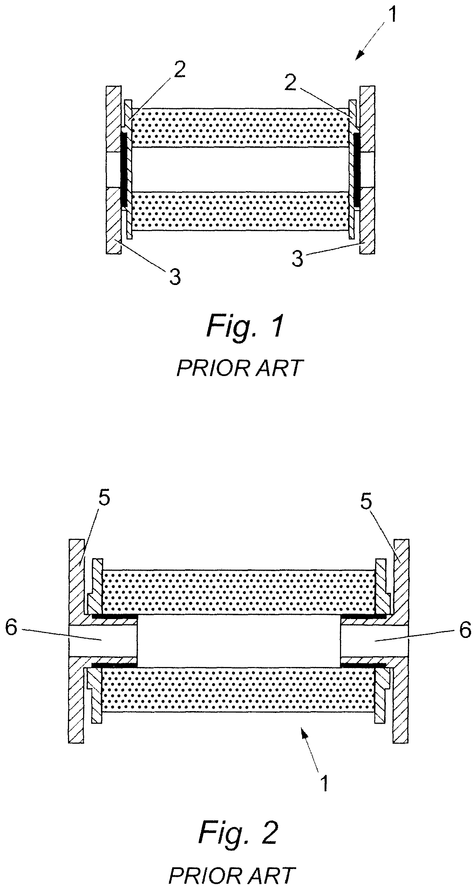

In automobiles it is common to provide a fuel filter in the fuel supply system in order to remove any impurities in the fuel before it is delivered to other components of the system. It is necessary to replace such fuel filters at regular service intervals in order to ensure correct operation of the fuel supply system. However, it can be difficult to ensure that the fuel filter is aligned correctly with its connections when attempting to reinstall it in the system. Referring to Fig. 1, one type of known filter element 1 has flat mounting faces 2 which connect with corresponding flat connection faces 3 of the fuel filter housing. In such a system, a relatively large clamping force must be maintained between the mounting faces 2, 3 in order to hold the filter element in place. It can also be difficult to ensure a fluid tight seal is provided between such flat faces 2, 3. Furthermore, there is nothing to guide the filter element 1 and filter housing into alignment with one another. This often results in misalignment of the filter element 1 and housing which can reduce the efficacy of the filter.

Referring to Fig. 2, (and also to United States Patent No. 4, 011, 848) an improvement on the above arrangement has connection faces 5 with a pair of tubes 6 projecting therefrom. The tubes 6 are inserted into the bore of the filter element 1 and act as a support to prevent movement of the filter element 1 relative to the connection faces of the housing with minimal clamping force between the faces of the housing and filter element being required. However, it can still be difficult to align the tubes 6 with the bore of the filter element during re-installation.

In each of the above described arrangements, it is necessary to provide an overmolding of a suitable material (such as rubber) in order to ensure a sufficient seal is formed.

EP 0 771 582 A discloses a further filter assembly. According to a first aspect of the present invention there is provided a filter element having a mounting at either end wherein each of the mountings is provided with one of a convex protrusion or concave indentation for connecting the fuel filter to a corresponding mounting of a fuel filter housing.

According to a second aspect of the present invention there is provided fuel filter housing comprising mountings for connection to either end of a fuel filter element, wherein each of the mountings is provided with one of a convex protrusion or concave indentation for connection to a corresponding mounting of a fuel filter element.

Other preferred features and advantages of the invention will be apparent from the following description and the claims.

Embodiments of the invention will now be described, by way of example only, with reference to the drawings, in which:-
Fig. 1 is a schematic cross sectional view of a prior art filter arrangement not in accordance with the present invention. In this filter, the faces of the filter housing and filter element are flush with one another and are held in alignment by frictional contact therebetween;
Fig. 2 is a schematic cross sectional view of a second prior art filter arrangement not in accordance with the present invention. In this filter, a connection tube on the filter housing is inserted into the bore of the filter element;
Fig. 3 is transverse cross sectional view of the fuel filter element and fuel filter housing in accordance with the first and second aspects of the present invention;
Fig. 4A is a schematic perspective view of the fuel filter of Fig. 3 viewed from below; and
Fig. 4B is a schematic perspective view of the fuel filter of Fig. 3 viewed from one side.

Fuel filter element 10 is housed within a fuel filter housing 12 which comprises part of a vehicle fuel supply system.

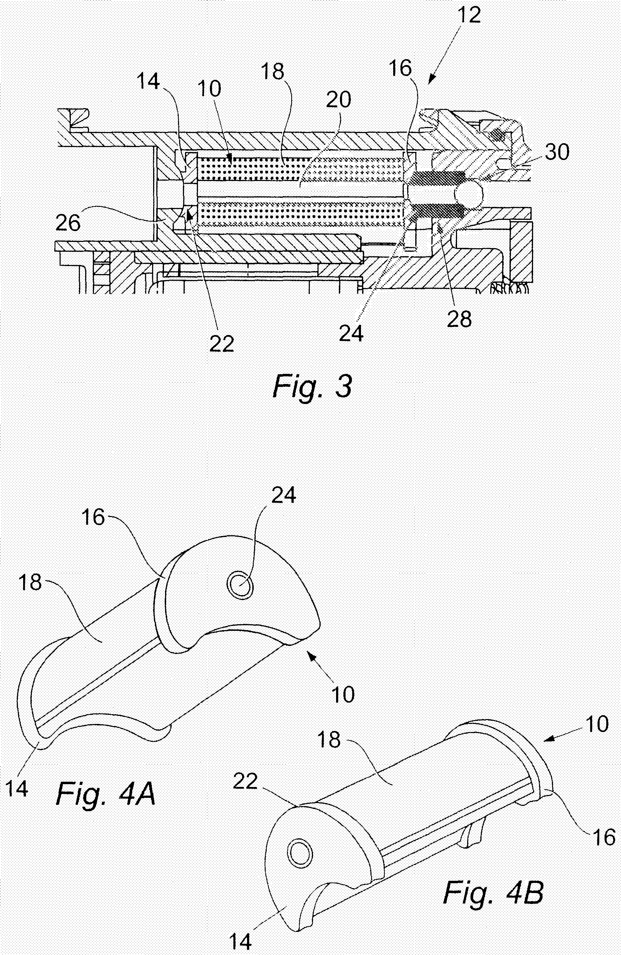

The fuel filter element 10 has an inlet mounting 14 at one end and an outlet mounting 16 at the opposite end. As seen in Figs 4A and 4B, in the embodiments shown, these mountings are crescent shaped and coincide with an inner surface of the fuel filter housing; however, any suitable shape could be used. Each of the mountings 14, 16 have a convex indentation and circular aperture 22, 24. The mountings 14, 16 provide support to the fuel filter element 10 within the fuel filter housing 12. Standard filter material 18 of known construction connects each mounting 14, 16 and a central bore 20 is provided through this filter material 18.

The fuel filter housing 12 has an inner wall shape which corresponds to the crescent shape of the fuel filter element 10 and has an inlet mounting 26 and an outlet mounting 28 at either end thereof which correspond to the inlet 14 and outlet 16 mountings of the fuel filter element 10. In the embodiment shown, the inlet mounting 26 is in the form of a rigid boss (convex protrusion) with a bore therethrough and the outlet mounting 28 comprises a resilient neck formed from a resilient material such as rubber. The outlet mounting 28 also has a ball and seat to provide a one way valve arrangement 30. The skilled reader will realise that the rigid outlet mounting 26 and resilient outlet mounting 28 could be swapped with one another to provide any combination of inlet and outlet mounting as required.

In use, as the fuel filter element 10 is loaded into the housing 12, the inlet mounting 14 of the fuel filter element 10 abuts against the inlet mounting 26 of the housing. Simultaneously, the outlet mounting 16 of the fuel filter element 10 abuts against the outlet mounting 28 of the housing. The resilience of the outlet mounting 28 of the housing allows it to compress slightly during the loading operation whilst the other end of the fuel filter element abuts against the inlet mounting 26. The resilience of the outlet mounting 28 also has the advantage of providing a fluid tight seal against the outlet mounting 16.

The interaction between the convex surfaces of the inlet mounting 26 and outlet mounting 28 of the housing and the concave surface of the inlet mounting 14 and outlet mounting 16 of the fuel filter element 10 causes any angular misalignment of the fuel filter element 10 relative to housing 12 to be compensated for since the combined effect of interaction tends to centralise the fuel filter element 10 within the housing 12. In other words, if, for example, the inlet mounting 14 of the filter element is introduced to the inlet mounting 26 of the housing at an angle offset from the longitudinal axis of the filter element, the tendency is for the convex protrusion of the inlet mounting 26 to cause the filter element 10 to self-align its bore 20 with the bore of the inlet mounting 26.

### Advantages offered by the invention include:-

- Simplification and acceleration of the installation procedure;
- A reduced likelihood of misalignment and hence malfunction of the fuel filter arrangement; and
- An improved sealing effect provided by the resilient outlet mounting 28 which secures the fuel filter element 12 in the housing 10 in a fluid tight manner. This removes the need to provide an overmould (such as rubber) at the interface between the mountings 14, 16 and 26, 28.

Modifications and improvements may be made to the foregoing without departing from the scope of the invention, for example, in the embodiment shown, the convex protruding sections are provided on the fuel filter housing and the corresponding indentations on the fuel filter element; however, an opposite arrangement (with the convex protruding sections on the fuel filter element and the corresponding concave indentations on the fuel filter housing) could be used.

## Claims

1. A filter element (10) having an inlet mounting (14) at one end and an outlet mounting (16) at the opposite end for connecting the fuel filter element (10) to a corresponding inlet mounting (26) and a corresponding outlet mounting (28) of a fuel filter housing (12), a filter material (18) connecting the inlet mounting (14) of the filter element (10) to the outlet mounting (16) of the filter element (10), **characterised in that** each of the inlet and outlet mountings (14, 16) of the filter element (10) is provided with one of a substantially convex protrusion and aperture or substantially concave indentation and aperture for connecting the fuel filter element (10) to the corresponding inlet and outlet mountings (26, 28) of the fuel filter housing (12), said fuel filter housing (12) having corresponding substantially concave indentation and aperture or substantially convex protrusion and aperture, such that the interaction between the concave surfaces, respectively the convex surfaces, of the inlet and outlet mountings (26, 28) of the fuel filter housing (12) and the convex surfaces, respectively the concave surfaces, of the inlet and outlet mountings (14, 16) of the fuel filter element (10) causes any angular misalignment of the fuel filter element (10) relative to the housing (12) to be compensated for.

2. A fuel filter element (10) according to claim 1, wherein the fuel filter element (10) has a crescent shaped cross section.

3. A fuel filter element (10) according to any preceding claim, wherein at least one of the substantially convex protrusions and aperture or substantially concave indentations and aperture comprises a resilient member for providing a fluid tight seal between each filter element mounting (14, 16) and each corresponding filter housing mounting (26, 28).

4. A fuel filter housing (12) comprising:-
an inlet mounting (26) and an outlet mounting (28) at either end thereof for connection to either end of a fuel filter element (10) having corresponding inlet and outlet mountings (14, 16), **characterised in that** each of the mountings (26, 28) of the fuel filter housing (12) is provided with one of a convex protrusion and aperture or concave indentation and aperture for connection to the corresponding inlet and outlet mountings (14, 16) of the fuel filter element (10) having corresponding substantially concave indentation and aperture or substantially convex protrusion and aperture, such that the interaction between the concave surfaces, respectively the convex surfaces, of the inlet and outlet mountings (26, 28) of the fuel filter housing (12) and the convex surfaces, respectively the concave surfaces, of the inlet and outlet mountings (14, 16) of the fuel filter element (10) causes any angular misalignment of the fuel filter element (10) relative to the housing (12) to be compensated for.

5. A fuel filter housing according to claim 4, wherein the fuel filter housing (12) is adapted to house a crescent shaped fuel filter element (10).

6. A fuel filter housing according to either of claims 4 or 5, wherein at least one of the convex protrusions and aperture or concave indentations and aperture comprises a resilient member (28) for providing a fluid seal between each filter element mounting (14, 16) and each corresponding filter housing mounting (26, 28).

7. A fuel filter housing according to claim 6, wherein the resilient member (28) comprises a rubber one-way valve body.

8. A fuel filter arrangement **characterized in that** it comprises a fuel filter element (10) according to any of claims 1 to 3 and a fuel filter housing (12) according to any of claims 4 to 7.

## Patentansprüche

1. Ein Filterelement (10) mit einer Einlass-Befestigung (14) an einem Ende und einer Auslass-Befestigung (16) an dem entgegengesetzten Ende zum Verbinden des Kraftstofffilterelements (10) mit einer entsprechenden Einlass-Befestigung (26) und einer entsprechenden Auslass-Befestigung (28) eines Kraft-stofffiltergehäuses (12), wobei ein Filtermaterial (18) die Einlass-Befestigung (14) des Filterelements (10) mit der Auslass-Befestigung (16) des Filterelements (10) verbindet,
**dadurch gekennzeichnet, dass** jede der Einlass- und Auslass-Befestigungen (14, 16) des Filterelements (10) mit einem aus einem im Wesentlichen konvexen Vorsprung und einer Öffnung und einer im Wesentlichen konkaven Vertiefung und einer Öffnung vorgesehen ist zum Verbinden des Kraftstofffilterelements (10) mit den entsprechenden Einlass- und Auslass-Befestigungen (26, 28) des Kraftstofffiltergehäuses (12), wobei das Kraftstofffiltergehäuse (12) eine entsprechende im Wesentlichen konkave Vertiefung und eine Öffnung oder einen im Wesentlichen konvexen Vorsprung und eine Öffnung hat derart, dass die Interaktion zwischen den konkaven Oberflächen beziehungsweise den konvexen Oberflächen der Einlass- und Auslass-Befestigungen (26, 28) des Kraftstofffiltergehäuses (12) und den konvexen Oberflächen beziehungsweise den konkaven Oberflächen der Einlass- und Auslass-Befestigungen (14, 16) des Kraftstofffilterelements (10) bewirkt, dass eine winkelförmige Fehlausrichtung des Kraftstofffilterelements (10) relativ zu dem Gehäuse (12) kompensiert wird.

2. Ein Kraftstofffilterelement (10) gemäß Anspruch 1, wobei das Kraftstofffilterelement (10) einen sichelförmigen Querschnitt hat.

3. Ein Kraftstofffilterelement (10) gemäß einem vorhergehenden Anspruch, wobei zumindest eines der im Wesentlichen konvexen Vorsprünge und der Öff-nung oder im Wesentlichen konkaven Vertiefungen und der Öffnung ein elastisches Element aufweist zum Vorsehen einer fluiddichten Abdichtung zwischen jeder Filterelement-Befestigung (14, 16) und jeder entsprechenden Filtergehäuse-Befestigung (26, 28).

4. Ein Kraftstofffiltergehäuse (12), das aufweist:
eine Einlass-Befestigung (26) und eine Auslass-Befestigung (28) an jedem Ende davon zur Verbindung mit jedem Ende eines Kraftstofffilterelements (10) mit entsprechenden Einlass- und Auslass-Befestigung (14, 16), **dadurch gekennzeichnet, dass** jede der Befestigungen (26, 28) des Kraftstofffiltergehäuses (12) mit einem aus einem konvexen Vorsprung und einer Öffnung oder einer konkaven Vertiefung und einer Öffnung vorgesehen ist zum Verbinden mit den entsprechenden Einlass- und Auslass-Befestigungen (14, 16) des Kraftstofffilterelements (10), das eine entsprechende im Wesentlichen konkave Vertiefung und eine Öffnung oder einen im Wesentlichen konvexen Vorsprung und eine Öffnung hat, derart, dass die Interaktion zwischen den konkaven Oberflächen beziehungsweise den konvexen Oberflächen der Einlass- und Auslass-Befestigungen (26, 28) des Kraftstofffiltergehäuses (12) und den konvexen Oberflächen beziehungsweise den konkaven Oberflächen der Einlass- und Auslass-Befestigungen (14, 16) des Kraft-stofffilterelements (10) bewirkt, dass eine winkelförmige Fehlausrichtung des Kraftstofffilterelements (10) relativ zu dem Gehäuse (12) kompensiert wird.

5. Ein Kraftstofffiltergehäuse gemäß Anspruch 4, wobei das Kraftstofffiltergehäuse (12) ausgebildet ist zum Aufnehmen eines sichelförmigen Kraftstofffilterelements (10).

6. Ein Kraftstofffiltergehäuse gemäß einem der Ansprüche 4 oder 5, wobei zumindest eines der konvexen Vorsprünge und der Öffnung oder der konkaven Vertiefungen und der Öffnung ein elastisches Element (28) aufweist zum Vorsehen einer Fluid-Abdichtung zwischen jeder Filterelement-Befestigung (14, 16) und jeder entsprechenden Filtergehäuse-Befestigung (26, 28).

7. Ein Kraftstofffiltergehäuse gemäß Anspruch 6, wobei das elastische Element (28) einen Gummi-Einwegventilkörper aufweist.

8. Eine Kraftstofffilteranordnung, **dadurch gekennzeichnet, dass** diese ein Kraftstofffilterelement (10) gemäß einem der Ansprüche 1 bis 3 und ein Kraft-stofffiltergehäuse (12) gemäß einem der Ansprüche 4 bis 7 aufweist.

## Revendications

1. Élément formant filtre (10) ayant une monture d'entrée (14) à une extrémité et une monture de sortie (16) à l'extrémité opposée pour connecter l'élément formant filtre à carburant (10) à une monture d'entrée correspondante (26) et à une monture de sortie correspondante (28) d'un boîtier de filtre à carburant (12), un matériau de remplissage (18) qui connecte la monture l'entrée (14) de l'élément formant filtre (10) à la monture de sortie (16) de l'élément formant filtre (10),
**caractérisé en ce que** la monture d'entrée et la monture de sortie (14, 16) de l'élément formant filtre (10) sont dotées chacune soit d'une projection sensiblement convexe avec une ouverture, soit d'une dépression sensiblement concave avec une ouverture pour connecter l'élément formant filtre à carburant (10) aux montures d'entrée et de sortie (26, 28) correspondantes du boîtier de filtre à carburant (12), ledit boîtier de filtre à carburant (12) ayant soit une dépression sensiblement concave avec une ouverture, soit une projection sensiblement convexe avec une ouverture, de façon correspondante, de sorte que l'interaction entre les surfaces concaves ou respectivement les surfaces convexes de la monture d'entrée et de la monture de sortie (26, 28) du boîtier de filtre à carburant (12) et les surfaces convexes ou respectivement les surfaces concaves de la monture d'entrée et de la monture de sortie (14, 16) de l'élément formant filtre à carburant (10) entraîne une compensation d'un quelconque défaut d'alignement angulaire de l'élément formant filtre à carburant (10) par rapport au boîtier (12).

2. Élément formant filtre à carburant (10) selon la revendication 1, dans lequel l'élément formant filtre à carburant (10) a une section transversale en forme de croissant.

3. Élément formant filtre à carburant (10) selon l'une quelconque des revendications précédentes, dans lequel l'une au moins des projections sensiblement convexes avec ouverture ou des dépressions sensiblement concaves avec ouverture comprend un élément élastique pour assurer un joint étanche aux fluides entre chaque monture d'élément formant filtre (14, 16) et chaque monture de boîtier de filtre (26, 28) correspondante.

4. Boîtier de filtre à carburant (12) comprenant :
une monture d'entrée (26) et une monture de sortie (28) à ses deux extrémités pour la connexion aux deux extrémités d'un élément formant filtre à carburant (10) ayant une monture d'entrée et une monture de sortie (14, 16) correspondantes, **caractérisé en ce que** chacune des montures (26, 28) du boîtier de filtre à carburant (12) est dotée soit d'une projection convexe avec une ouverture soit d'une dépression concave avec une ouverture pour la connexion à la monture d'entrée et la monture de sortie (14, 16) correspondante de l'élément formant filtre à carburant (10) ayant soit une dépression sensiblement concave avec ouverture soit une projection sensiblement convexe avec ouverture, de façon correspondante, de telle façon que l'interaction entre les surfaces concaves ou respectivement les surfaces convexes de la monture d'entrée et de la monture de sortie (26, 28) du boîtier de filtre à carburant (12), et les surfaces convexes ou respectivement les surfaces concaves de la monture d'entrée et de la monture de sortie (14, 16) de l'élément formant filtre à carburant (10) entraîne la compensation d'un quelconque défaut d'alignement angulaire de l'élément formant filtre à carburant (10) par rapport au boîtier (12).

5. Boîtier de filtre à carburant selon la revendication 4, dans lequel le boîtier de filtre à carburant (12) est adapté à abriter un élément formant filtre à carburant (10) en forme de croissant.

6. Boîtier de filtre à carburant selon l'une ou l'autre des revendications 4 ou 5, dans lequel l'une au moins soit des projections convexes avec ouverture soit des dépressions concaves avec ouverture comprend un élément élastique (28) pour assurer un joint étanche aux fluides entre chaque monture d'élément formant filtre (14, 16) et chaque monture de boîtier de filtre correspondante (26, 28).

7. Boîtier de filtre à carburant selon la revendication 6, dans lequel l'élément élastique (28) comprend un corps de clapet antiretour en caoutchouc.

8. Agencement formant filtre à carburant, **caractérisé en ce qu'**il comprend un élément formant filtre à carburant selon l'une quelconque des revendications 1 à 3 et un boîtier de filtre à carburant (12) selon l'une quelconque des revendications 4 à 7.
